(19) Europäisches Patentamt
European Patent Office
Office européen des brevets

(11) EP 0 994 439 A2

## (12) EUROPEAN PATENT APPLICATION

(43) Date of publication:
19.04.2000 Bulletin 2000/16

(51) Int. Cl.⁷: **G06K 19/07**

(21) Application number: 99120322.5

(22) Date of filing: 12.10.1999

(84) Designated Contracting States:
**AT BE CH CY DE DK ES FI FR GB GR IE IT LI LU MC NL PT SE**
Designated Extension States:
**AL LT LV MK RO SI**

(30) Priority: **13.10.1998 JP 29057298**

(71) Applicant: **SONY CORPORATION Tokyo (JP)**

(72) Inventor: **Imagawa, Toshiyuki Shinagawa-ku, Tokyo (JP)**

(74) Representative:
**MÜLLER & HOFFMANN Patentanwälte Innere Wiener Strasse 17 81667 München (DE)**

### (54) IC card

(57) An IC card capable of reliably determining an authentic user of an IC card and improving the security. Provision of a fingerprint image taker for detecting the fingerprint image of a finger, a fingerprint data storage unit for storing and holding the fingerprint data of a specific finger, a data input/output controller and a high frequency block 8 for performing the input and output of data between the IC card and an apparatus without contact, and a fingerprint data comparator for comparing the detected fingerprint data with the stored fingerprint data and permitting the input/output of the data to/from the outside apparatus only where the two coincide.

FIG. 1

EP 0 994 439 A2

**Description**

BACKGROUND OF THE INVENTION

1. Field of the Invention

The present invention relates to an IC card.

2. Description of the Related Art

For example, as an IC card in which integrated circuits constituting a microprocessor and a memory are embedded, a contact type IC card equipped with external terminals and a noncontact type IC card not having external terminals are known. The noncontact type IC card does not have to be directly connected to any outside apparatus, so has the advantage of a good operability.

On the other hand, in an IC card, in order to prevent illicit use of the IC card, various methods have been proposed for determining if the user of the IC card is the authentic user so as to improve the security of the IC card.

As the method of confirming whether the user is the correct one, for example, there is known the method of the user inputting a personal identification number to an outside apparatus for transferring data with the IC card, that is, a read writer.

In this method, when inserting the IC card into the read writer, the personal identification number stored in the IC card is read into the read writer and compared with the personal identification number input by the user into the read writer. When the two personal identification numbers coincide, the user can use the IC card.

In the above method, however, even in a case where the user of the IC card is not the authentic user, if the user learns the personal identification number stored in the IC card, he can use the IC card, so this is not sufficient in view of security.

Further, if adopting a configuration of inputting a personal identification number to an outside apparatus, the advantage of a noncontact type IC card of enabling operation without contact with the outside apparatus and having a good operability is degraded.

Further, the method may be considered of a manager of the outside apparatus, that is, the read writer, registering the fingerprint of a specific finger of the authentic user in advance so as to determine if the user of the IC card is the authentic user and of comparing the fingerprint of the user and the registered fingerprint at the time of utilization of the IC card.

In this method, however, the manager of the read writer manages the fingerprint information and then the fingerprints are checked, therefore there is the danger of for example the data in the IC card being altered by using the fingerprint information registered by the manager of the read writer or an illicit user who obtains the registered fingerprint information preparing a copy (imitation mold) of the fingerprint information and illicitly using the IC card.

SUMMARY OF THE INVENTION

An object of the present invention to provide an IC card capable of reliably discriminating the authentic user of the IC card and improving the security.

According to a first aspect of the present invention, there is provided with an IC card, comprising a fingerprint detecting means for detecting a fingerprint; a fingerprint data storing means for storing a fingerprint data of a specific finger; a data input/output means for inputting and/or outputting a data from and/or to an apparatus; and a comparing means for comparing the fingerprint data detected at the fingerprint detecting means with the fingerprint data stored in the fingerprint data storing means and permitting the operation of the data input/output means only when the two coincide.

According to a second aspect of the present invention, there is provided an IC card, comprising a biosensing means for sensing at least a part of human body, and a fingerprint detecting means for detecting a fingerprint when the biosensing means detected at least a part of human body.

BRIEF DESCRIPTION OF THE DRAWINGS

These and other objects and features of the present invention will become clearer from the following description of the preferred embodiments given with reference to the accompanying drawings, in which:

Fig. 1 is a view of the configuration of an IC card according to an embodiment of the present invention;
Fig. 2 is a view of an example of the hardware structure for realizing an IC card according to an embodiment of the present invention;
Fig. 3 is a view of an example of a position for forming the fingerprint image detection region of the IC card;
Fig. 4 is a sectional view of an example of the position for forming the fingerprint image detection region of the IC card;
Fig. 5 is a circuit diagram of an example of the electrostatic capacitance detection circuit;
Fig. 6 is a view of an example of the fingerprint image detection element;
Fig. 7 is a flow chart for explaining an example of the method of using the IC card;
Fig. 8 is a view of the surface configuration of the IC chip;
Fig. 9 is a view of the circuit configuration of the IC chip;
Fig. 10 is a view for explaining the detection principle of fingerprint;

Fig. 11 is a view showing the state when a finger is located close to the electrode of the IC chip; and

Fig. 12 is a flow chart for explaining other example of the method of using the IC card.

## DESCRIPTION OF THE PREFERRED EMBODIMENTS

Below, an explanation will be made of an embodiment of the present invention by referring to the drawings.

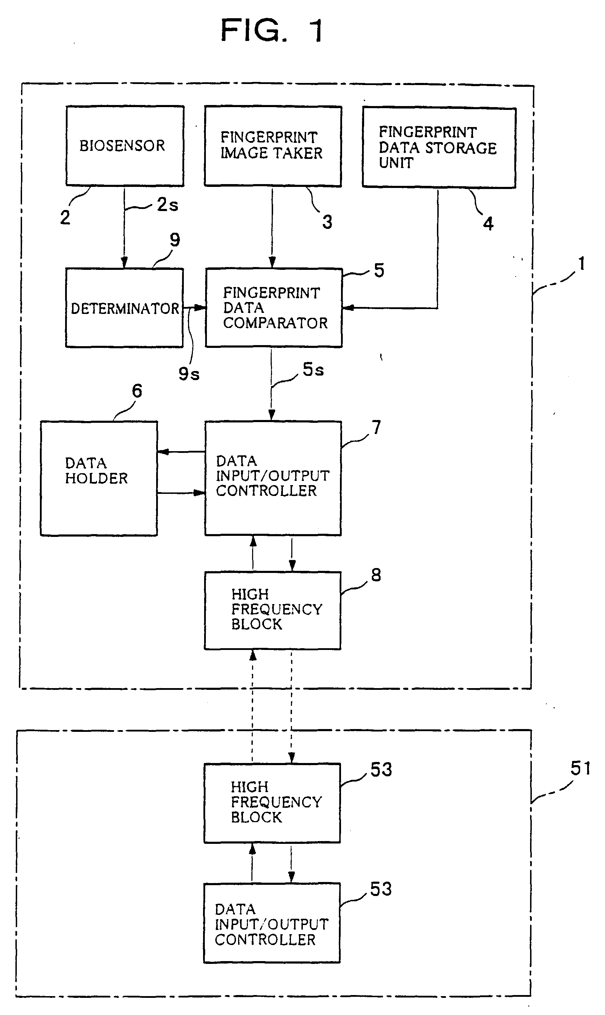

Figure 1 is a view of the configuration of an IC card according to an embodiment of the present invention.

An IC card 1 shown in Fig. 1 has a biosensor 2, a fingerprint image taker 3, a fingerprint data storage 4, a fingerprint data comparator 5, a data holder 6, a data input/output controller 7, a high frequency block 8 and a determinator 9.

The biosensor 2 detects whether or not the finger to be detected is part of the human body when acquiring the fingerprint image data of the user of the IC card 1. The biosensor 2 outputs a detection signal 2s to the determinator 9.

The determinator 9 determines whether or not the finger to be detected is part of the human body based on the detection signal 2s and outputs a permit signal 9s for permitting the fingerprint compare to the fingerprint data comparator 5.

The fingerprint image taker 3 obtains the fingerprint image data of the user of the IC card 1 and applies a predetermined processing, for example binary processing, to the related fingerprint image data to acquire the fingerprint data.

The fingerprint data storage unit 4 stores and holds the fingerprint data of the authentic user of the IC card 1 in advance. The fingerprint data is the data of a specific finger of the authentic user, for example, the forefinger.

The fingerprint data comparator 5 checks the fingerprint data of the authentic user stored and held in the fingerprint data storage unit 4 with the fingerprint data of the user of the IC card 1 acquired by the fingerprint image taker 3.

Where the fingerprint data of the authentic user and the acquired fingerprint data of the user coincide, the fingerprint data comparator 5 outputs an permit signal 5s to the data input/output controller 7.

The fingerprint data comparator 5 compares the fingerprint data of the authentic user and the acquired fingerprint data of the user only in a case where the permit signal 9s from the determinator9is input.

The data holder 6 stores and holds a variety of data input/output with the outside apparatus. For example, when the IC card 1 is used for electronic settlement, the account information of the authentic user, money transfer information, etc. are stored. When it is used as an ID card, a variety of personal information etc. are stored.

The data input/output controller 7 inputs and outputs various data with an outside apparatus 51 according to the permit signal 5s input from the fingerprint data comparator 5.

The data input/output controller 7 performs a work of reading the data to be output to the outside apparatus 51 from the data holder 6 and outputting the same to the high frequency block 8 or reading the data input from the outside apparatus 51 through the high frequency block 8 and writing the same into the data holder 6 when the permit signal 5s is input from the fingerprint data comparator 5, that is, when it is determined that the user of the IC card 1 is the authentic user.

The high frequency block 8 modulates the data output from the data input/output controller 7 to a high frequency signal and transmits this as a high frequency electromagnetic wave to the high frequency block 53 provided in the outside apparatus 51 by a wireless method.

The high frequency block 8 demodulates the high frequency signal comprised by the electromagnetic wave transmitted from the high frequency block 53 of the outside apparatus 51, converts this to the predetermined data format, and outputs the same to the data input/output controller 7.

The high frequency block 8 rectifies the AC power as the electromagnetic wave sent from the high frequency block 53 of the outside apparatus 51 and supplies the power supply 24. The power supply 24 supplies the required power to the circuits provided in the IC card 1.

The outside apparatus 51 has the high frequency block 53 and a data input/output controller 54. Further, the outside apparatus 51 is connected between the IC card and the manager of the IC card 1 or a person performing the data communication by for example a network means.

The data input/output controller 54 of the outside apparatus 51 controls the input/output operation of the data with the IC card 1 via the high frequency block unit 53. For example, the data transmitted to the outside apparatus 51 via for example a network means is input to the data input/output controller 54 or the data transmitted from the IC card 1 through the high frequency block unit 53 is input thereto.

The high frequency block unit 53 supplies the AC power from the AC power supply provided in the outside apparatus 51 as an electromagnetic wave to the high frequency block 8 of the IC card 1.

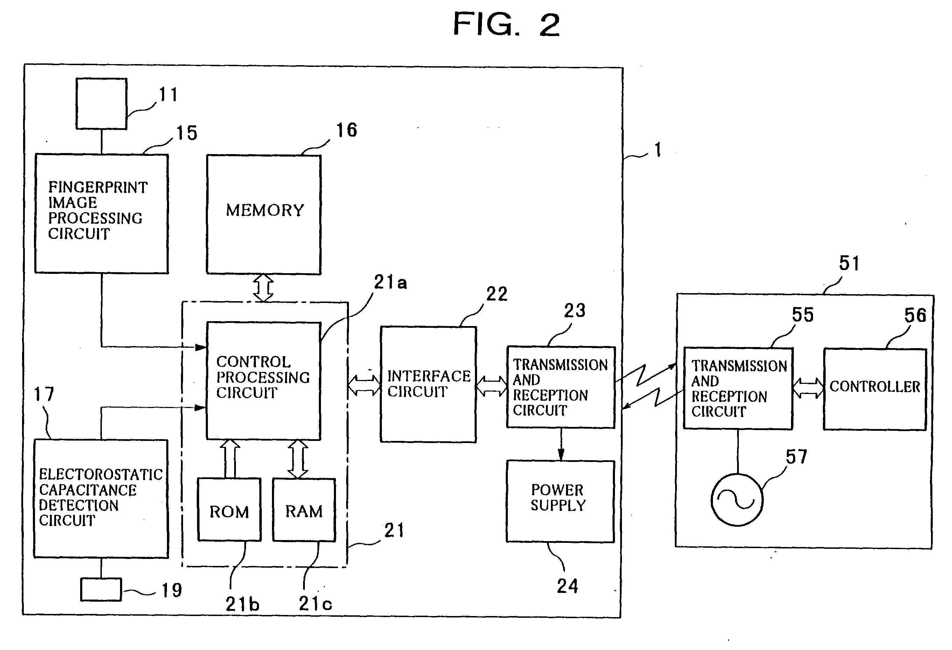

Figure 2 is a view of the configuration of an example of the hardware structure for realizing the IC card 1 of the above structure.

In Fig. 2, the IC card 1 has a finger print sensor 11, a fingerprint image processing circuit 15, a memory 16, an electrostatic capacitance detection circuit 17, an electrostatic capacitance detection electrode 19, a microprocessor 21, an interface circuit 22, a transmission and reception circuit 23, and a power supply 24.

The outside apparatus 51 has a transmission and reception circuit 55, a controller 56, and an AC power supply 57.

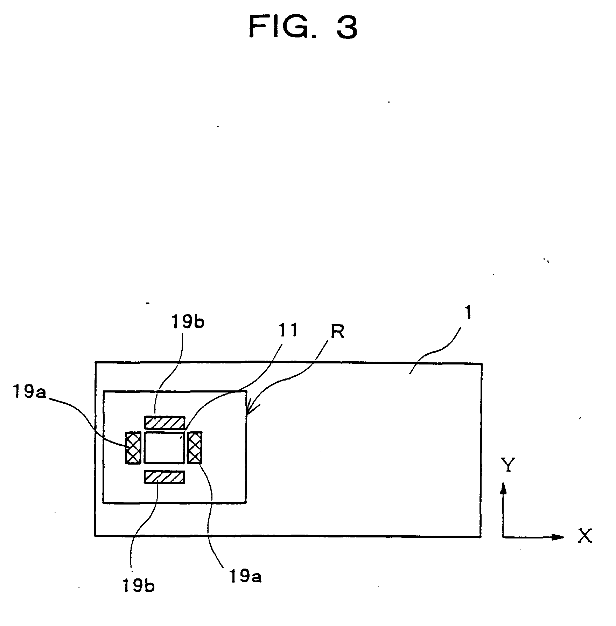

The finger print sensor 11 is an element for detecting the fingerprint image of a specific finger of the user of the IC card 1. The finger print sensor 11 is formed at a center position in the fingerprint image detection region R formed on the surface of the IC card 1 as shown in for example Fig. 3.

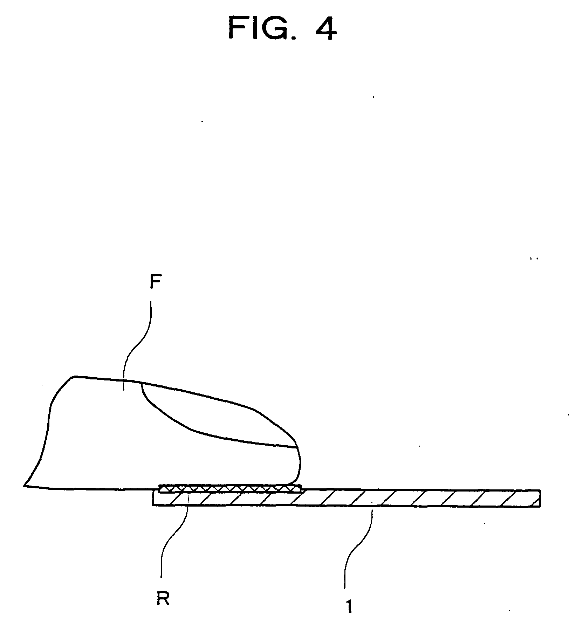

The fingerprint image detection region R can be formed to a size suited to the size of the front end of a finger F so that the finger F can be easily placed as shown in for example Fig. 4 and to a shape projecting a predetermined height from the surface of the IC card 1.

As the finger print sensor 11, for example, a charge coupled device (CCD) for detecting a fingerprint optically can be used.

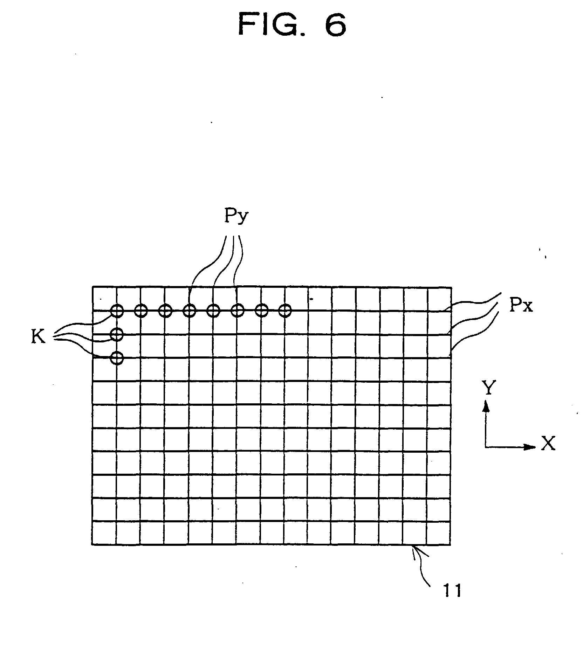

As the finger print sensor 11, for example, as shown in Fig. 6, the fingerprint image can be detected also by an IC chip 11 in which a plurality of patterns px and py are formed at predetermined intervals along an X-axis and a Y-axis and which is provided with an electrostatic capacitance detection circuit for detecting the electrostatic capacitance at each intersecting point K of these patterns px and py.

The human finger is formed with a fingerprint by grooves and ridges of a height of about 150 to 200 ?m. When bringing the finger into contact with the surface of the IC chip 11 where the patterns px and py are formed, due to the grooves and ridges of the finger, the electrostatic capacitance at each intersecting point K of the patterns px and py of the IC chip 11 comes to have a value in accordance with the height of the grooves and ridges.

Accordingly, by detecting the electrostatic capacitance at each intersecting point K and for example digitally processing the magnitude of the electrostatic capacitance at each intersecting point K, this can be converted to fingerprint data.

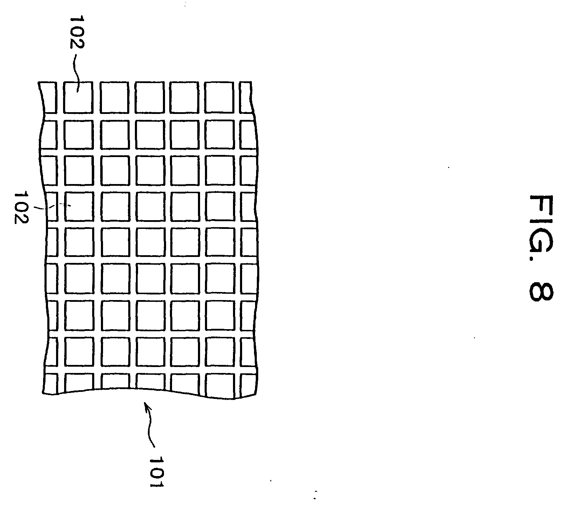

In Figs. 8 to 11, the specific configuration of the IC chip as the finger print sensor 11 for determining a fingerprint by electrostatic capacitance is shown.

As shown in Fig. 8, the IC ship 101 as the finger print sensor 11 has a plurality of electrostatic capacitance detecting element 102 which are arranged in the form of matrix.

The IC chip 101 covers an area of for example several square centimeter. The number of the electrostatic detecting element 102 which is formed in this area is for example several ten thousand to several hundred thousand. the electrostatic detecting element 102 are arranged with the spaces of for example several micrometer to several ten micrometer.

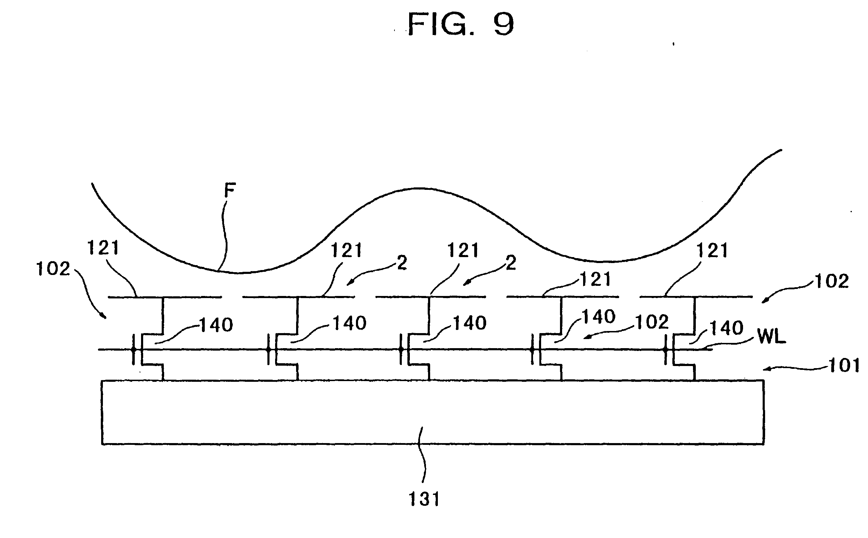

Fig. 9 is a view of the circuit configuration of the IC chip 101.

As shown in Fig. 9, the electrodes 21 of the electrostatic capacitance detecting element 102 is connected with a signal processing circuit 131 via a transistor104 functioning as a switch.

The gate of the transistor 140 connected with the electrostatic capacitance detecting element 102 arranged in the same row is connected with a selection line WL.

The signal processing circuit is a circuit for determining fingerprint image of finger F according to the detected signal by the each electrostatic capacitance detecting element 102.

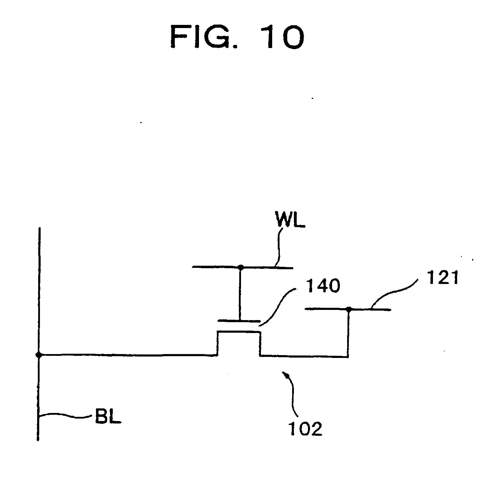

As shown in Fig. 10, the electrode 121 of the electrostatic capacitance detecting element 102 is connected with selection line BL in the column direction via the transistor 140. The gate of the transistor 140 is connected with a selection line WL in the row direction.

When the finger F is located a position at a distance d from the electrode 121, electrostatic capacitance Cs between the electrode 121 and the finger F is expressed by the following formula (1). Note that $\varepsilon_0$ denotes dielectric constant of air, $\varepsilon$ denotes dielectric constant of a cover film formed on the electrode 121,and S denotes an area of the electrode121.

$$Cs = \varepsilon \cdot \varepsilon_0 \cdot s/d \qquad (1)$$

Accordingly, in the state that the finger F not faces the electrode 121 of the IC chip 101, the distance d between the electrode 121 and the finger F becomes infinitely long, so the electrostatic capacitance Cs on the electrode 121becomes zero.

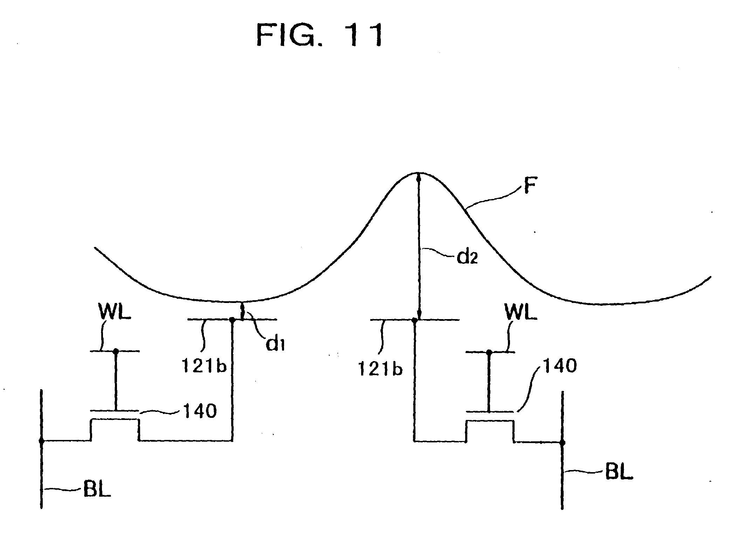

As shown in Fig. 11, when the finger F is located close to the electrode 121 of the IC chip 101, the distance d between the electrode 121a, 121b and the finger F becomes d1, d2 by grooves and ridges of the finger F. Then, by precharging the selection line BL by predetermined voltage Vcc, and switching on the transistor 140 by impressing voltage to the selection line WL, electric charge according to the electrostatic capacitance Cs defined by the distanced1andd2 is accumulated on the electrode 121a, 121b. The electric potential of the selection line BL is changed by the amount of these electric charge. The change value $\Delta V$ of the electric potential of the selection line BL is expressed by the following formula (2) as the parasitic capacitance of the selection line BL is Cb.

$$\Delta V = \{ Cs / (Cb + Cs) \} Vcc \qquad (2)$$

The change value $\Delta V$ of the electric potential is respond to the electrostatic capacitance Cs defined by the distance d between the electrode 121 and the finger F.

It becomes possible to determine the fingerprint of the finger F by reading out the change value of the electric potential of the selection line BL at each electrostatic capacitance detecting element 102 to the signal processing circuit131.

The fingerprint image processing circuit 15 is built in the IC card 1 and applies predetermined processing to the fingerprint image data obtained by the finger print sensor 11 to convert this to fingerprint data.

Note that, the fingerprint image taker 3 is constituted by the finger print sensor 11 and the fingerprint image processing circuit 15.

The electrostatic capacitance detection electrode 19 comprises a plurality of electrodes for detecting the electrostatic capacitance possessed by the finger F of the user of the IC card 1. For example, as shown in Fig. 3, two electrodes 19a and 19b are formed so as to be exposed at the surface of the IC card 1 along the X-axis and Y-axis directions close to the periphery of the finger print sensor 11.

The electrostatic capacities Cx of the finger formed with the electrode 19a and electrode 19b are detected by for example the electrostatic capacitance detection circuit 17.

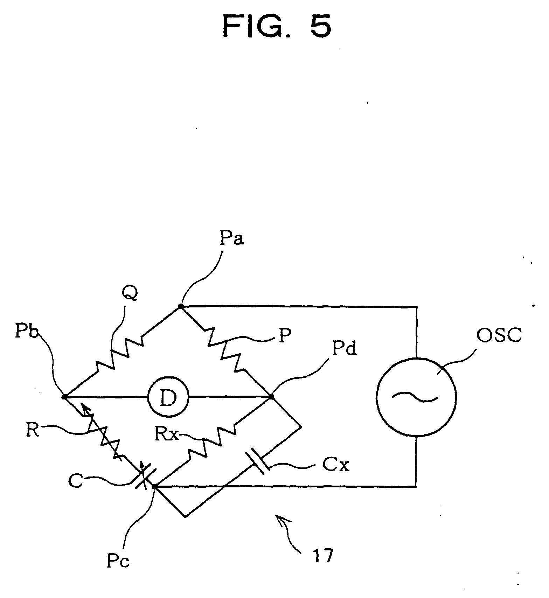

The electrostatic capacitance detection circuit 17 is constituted by a circuit which is built in the IC card 1 and generates an electric current (voltage) in accordance with the magnitude of the electrostatic capacitance Cx detected by the electrostatic capacitance detection electrode 19 as shown in for example Fig. 5.

The electrostatic capacitance detection circuit 17 shown in Fig. 5 is basically constituted by a so-called Wien bridge circuit. Known resistors Q and P are connected between a terminal Pa and a terminal Pb and between the terminal Pa and a terminal Pd. A variable resistor R and a variable capacitor C are connected in series between the terminal Pb and a terminal Pc.

Between the terminal Pc and the terminal Pd is formed an insulation resistor or leakage resistor or other resistor Rx formed between them and the electrostatic capacitance detection electrode 19a or 19b. The electrostatic capacitance Cx with the electrostatic capacitance detection electrode 19a or 19b is formed in parallel to the resistor Rx.

A current detection circuit D is connected between the terminal Pb and the terminal Pd, and an oscillator OSC is connected between the terminal Pa and the terminal Pc.

The oscillator OSC applies a voltage signal at a predetermined frequency between the terminal Pa and the terminal Pc. The oscillator OSC is built in for example the IC card 1 and generates a clock signal at a predetermined frequency by the power sent from the outside apparatus 51.

The current detection circuit D is a circuit for detecting the electric current flowing between the terminal Pb and the terminal Pd and can be constituted by for example an A/D conversion circuit.

Electrostatic capacitance detection circuits 17 having the above configuration are provided for both of the electrostatic capacitance detection electrodes 19a and 19b, but the invention may also be constituted so as to detect the electrostatic capacities Cx detected by the electrostatic capacitance detection electrodes 19a and 19b by for example switching a single electrostatic capacitance detection circuit 17.

In the electrostatic capacitance detection circuit 17 having the above structure, the variable resistor R and the variable capacitor C are adjusted so that for example the electric current does not flow through the current detection circuit D in a state where the finger does not contact the electrostatic capacitance detection electrodes 19a and 19b formed on the surface of the IC card 1.

In this state, when the finger contacts the electrostatic capacitance detection electrodes 19a and 19b formed on the surface of the IC card 1, an electric current of a magnitude in accordance with the electrostatic capacitance Cx of the finger flows through the current detection circuit D. In the current detection circuit D, this current value is converted to a digital value.

Accordingly, in the electrostatic capacitance detection circuit 17 of the above structure, a value of a current of a magnitude in accordance with the electrostatic capacitance Cx of the finger is obtained as a digital value.

The memory 16 constitutes the fingerprint data storage unit 4 and the data holder 6 and can be constituted by a rewritable memory, for example, an Erasable PROM (EPROM) or Electrically Erasable PROM (EEPROM).

The writing of the data into the memory 16 is carried out by a write voltage Vpp transmitted from the outside apparatus 51.

The microprocessor 21 has a control processing circuit 21a, a ROM 21b, and a RAM 21c inside this.

The ROM 21b stores a program defining various processing to be performed in the IC card 1. The function of the IC card 1 is determined by this program.

For example, a program for performing processing such as comparing of the fingerprint data of the fingerprint data comparator 5 is stored in the ROM 21b in advance.

The RAM 21c is a memory for temporarily holding the program data stored in the ROM 21b, data calculated at the control processing circuit 21a, data input from the interface circuit 22 and the fingerprint data output from the fingerprint image processing circuit 15.

The control processing circuit 21a executes the program stored in the ROM 21b and performs various processing operations and control operations of the peripheral circuits.

The interface circuit 22 converts the input data input through the transmission and reception circuit 23, for example, serial data, to parallel data and inputs the same to the control processing circuit 21a of the microprocessor 21 while converts the parallel data output from the control processing circuit 21a to serial data and outputs the same to the transmission and reception circuit 23.

The transmission and reception circuit 23 is a circuit which receives power from the transmission and reception circuit 55 of the outside apparatus 51 and performs the transmission and reception of various data with the transmission and reception circuit 55.

The transmission and reception circuit 23 can be constituted by circuits, for example, a tuning circuit having a coil and a capacitor, a modulation circuit, a demodulation circuit, and a rectification circuit.

The data output from the interface circuit 22 to the transmission and reception circuit 23 is modulated by the modulation circuit of the transmission and reception circuit 23 and transmitted to the transmission and reception circuit 55 of the outside apparatus 51 riding on the high frequency electromagnetic wave generated in the tuning circuit.

The tuning circuit of the transmission and reception circuit 23 receives the high frequency electromagnetic wave transmitted from the transmission and reception circuit 55 of the outside apparatus 51, converts an induced power by the electromagnetic induction function to DC power at the rectification circuit, and then stores this in the capacitor. The circuits involved in the IC card 1 are driven by the power stored in the capacitor.

The transmission and reception circuit 23 receives the data riding on the high frequency electromagnetic wave transmitted from the transmission and reception circuit 55 of the outside apparatus 51, demodulates the modulated data at the demodulation circuit of the transmission and reception circuit 23, and outputs the same to the interface circuit 22.

The transmission and reception circuit 55 of the outside apparatus 51 has a tuning circuit provided with a coil and capacitor and transmits the AC power to the transmission and reception circuit 23 of the IC card 1 in the form of an electromagnetic wave using an AC power supply 57 as the supply source. It modulates the data output from the controller 56 of the outside apparatus 51, places this on the electromagnetic wave, and transmits the same to the transmission and reception circuit 23 of the IC card 1. Further, it demodulates the data received by the transmission and reception circuit 55 of the outside apparatus 51 and outputs the same to the controller 56.

In the IC card 1 having the above structure, first, it is necessary to register the fingerprint data of a specific finger of the authentic user in the fingerprint data storage 4.

The fingerprint data of the authentic user is registered by, for example, building in a program for the registration of the fingerprint data in the ROM 21b of the microprocessor 21, holding up the IC card 1 near the outside apparatus 51 at the first utilization of the IC card 1, supplying power to the IC card 1, and running the program for the registration of the fingerprint data.

A structure can be adopted in which, when the user of the IC card 1 brings his specific finger into close contact with the finger print sensor 11 in the fingerprint image detection region R formed on the surface of the IC card 1, the fingerprint data obtained through the fingerprint image processing circuit 15 is stored at a predetermined address of the memory 16 from the microprocessor 21.

As described above, it is also possible to adopt a structure in which the program for the registration of the fingerprint data is not built into the IC card 1, but is prepared at the outside apparatus 51 side, the power is transmitted from the outside apparatus 51 to the IC card 1, and the program data for the registration of the fingerprint data is transmitted.

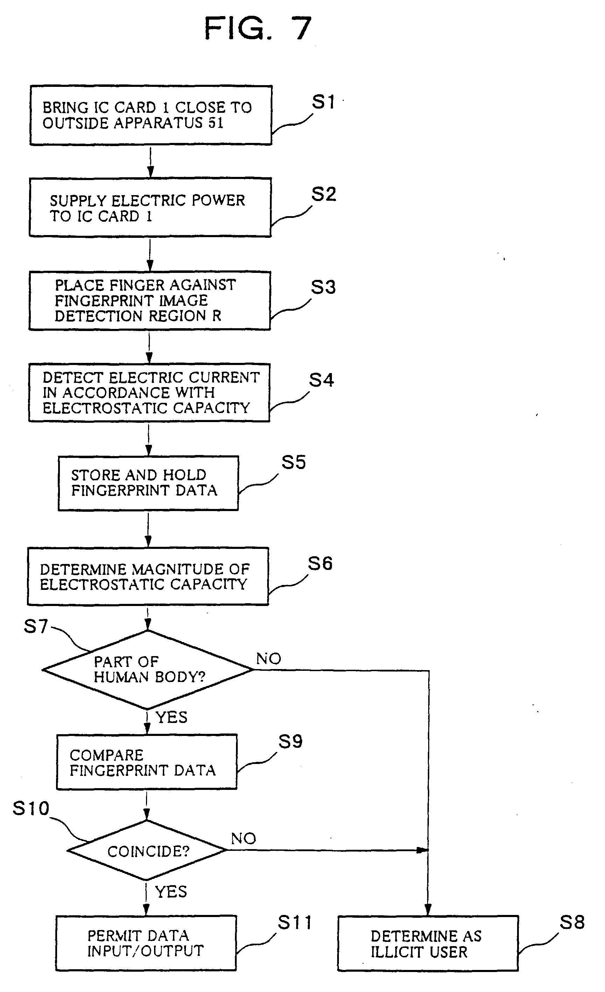

Next, an explanation will be made of an example of a method of using an IC card having the above structure based on the flow chart shown in Fig. 7.

First, the IC card 1 is brought close to a position where it can receive power by an electromagnetic from a predetermined outside apparatus 51 (step S1).

The IC card 1 is supplied with power from the transmission and reception circuit 55 of the outside apparatus 51 by the electromagnetic wave (step S2).

By this, the power supply voltage is supplied to the fingerprint image processing circuit 15 and the microprocessor 21 of the IC card 1.

A reset signal RST is transmitted from the transmission and reception circuit 55 of the outside apparatus 51 riding on the electromagnetic wave and input to the microprocessor 21 through the interface circuit 22, whereby the microprocessor 21 becomes operable.

The clock signal from the oscillator OSC is supplied to the electrostatic capacitance detection circuit 17, and the electrostatic capacitance detection circuit 17 enters a state capable of detecting the electrostatic capacitance Cx.

Subsequently, the user of the IC card 1 brings his specific finger into close contact with the fingerprint image detection region R formed on the IC card 1 (step S3).

The finger contacts the electrostatic capacitance detection electrode 19a and/or 19b formed in the fingerprint image detection region R, an electric current in accordance with the magnitude of the electrostatic capacitance Cx flows through the current detection circuit D of the electrostatic capacitance detection circuit 17, and this electric current is detected (step S4). The detected electric current value is held in the RAM 21c of the microprocessor 21.

Simultaneously with this, the fingerprint image of the finger is acquired by the finger print sensor 11. The fingerprint data subjected to the predetermined processing by the fingerprint image processing circuit 15 is stored and held in the RAM 21c of the microprocessor 21 (step S5).

Subsequently, it is compared and determined at the microprocessor 21 if the electric current in accordance with the magnitude of the electrostatic capacitance Cx stored in the RAM21c is at the predetermined value or within a predetermined range (Step S6).

It is determined whether or not the object in contact with the electrostatic capacitance detection electrode 19a and/or 19b of the IC card 1 is a part of human body(step S7).

For example, in an imitation obtained by copying the human finger, the electric current value detected at the current detection circuit D of the electrostatic capacitance detection circuit 17 becomes a value different from the electrostatic capacitance possessed by the human finger, therefore the object is determined to be not a part of human body , but an illicit user (step S8).

In this case, the processing inside the IC card is stopped.

When the object is determined to be a part of human body, the fingerprint data of the authentic user registered in the memory 16 in advance is read to the RAM21c of the microprocessor 21 and is compared with the detected fingerprint data stored in the RAM 21c of the microprocessor 21 (step S9).

It is determined if the fingerprint data of the authentic user and the detected fingerprint data coincide (step S10). When the detected fingerprint data of the user of the IC card 1 and the fingerprint data of the authentic user registered in advance do not coincide, the user is determined to be an illicit user (step S8).

When the detected fingerprint data of the user of the IC card 1 and the fingerprint data of the authentic user registered in advance coincide, the user of the IC card 1 is determined to be the authentic user and the input/output of the data between the outside apparatus 51 and the IC card 1 is permitted (step S11).

As a result, the control processing circuit 21a of the microprocessor 21 transfers the data between the interface circuit 22 and the memory 16.

By this, noncontact data communication between the outside apparatus 51 and the IC card 1 becomes possible.

As described above, according to the IC card 1 of the present embodiment, a structure is adopted in which the fingerprint data of the authentic user of the IC card 1 is registered in the IC card 1 in advance, the fingerprint image of the user is detected at the time of utilization of the IC card 1 and fetched into the IC card 1, and the registered fingerprint data and the detected fingerprint data are compared, therefore the authenticity of the user of the IC card can be reliably determined.

According to the IC card 1 of the present embodiment, since the fingerprint data is registered and held in the IC card 1 and the fingerprint data can be managed by the authentic user of the IC card 1, the data will not be abused by the manager of the outside apparatus 51 or others intruding through the network means.

According to the present embodiment, since there is no external terminal for the connection with the outside apparatus 51 in the IC card 1, even if for example the IC card 1 is lost, the fingerprint data and various data registered from the outside apparatus will not be stolen by others.

According to the present embodiment, since the authentic user of the IC card 1 can be specified by the check of the fingerprint data, therefore, for example, it is not necessary to input the personal identification number etc. to the outside apparatus 51, so the handling of the IC card 1 is improved.

According to the present embodiment, since the authentic user of the IC card 1 can be specified in the IC card 1, it is not necessary to communicate etc. with the outside apparatus 51 for identifying the authentic user and the time required for identifying the authentic user can be shortened.

According to the present embodiment, since the power for driving the IC card 1 is supplied from the outside apparatus 51without contact, for example, even if the IC card 1 is lost, the IC card 1 can not be used unless there is the outside apparatus 51, so the safety of the IC card 1 is further improved.

According to the present embodiment, it is not necessary to connect the IC card 1 to the outside apparatus 51, the work of connecting the IC card 1 to the outside apparatus 51 can be eliminated, and the problems of wear etc. due to connection with the outside apparatus 51 are solved.

According to the present embodiment, the electrostatic capacitance detection electrode 19 for detecting a part of human body and the electrostatic capacitance detection circuit 17 provided in the fingerprint image detection region R of the IC card 1 enable detection of whether or not the object in contact with the fingerprint image detection region R is a part of human body, enables prevention of misuse of the IC card 1 using an imitation etc. copying for example the fingerprint data, and enable the safety of the IC card 1 to be further improved.

In the embodiment, only the fingerprint data was registered in the IC card 1, but the value of the electrostatic capacitance possessed by the finger of the person who registered can also be registered at a predetermined address of the memory 16 in the IC card 1 together with the registration of the fingerprint data.

The detected electrostatic capacitance is different between a person whose finger is wet and a person whose finger is dry, therefore the current detected in the current detection circuit D is also different between a person whose finger is wet and a person whose finger is dry.

Accordingly, at the time of utilization of the IC card, if it is determined from the current value of the current detection circuit D of the electrostatic capacitance detection circuit 17 obtained from the finger of the user whether the finger is wet or dry, it is possible to about a rough grasp on the check between the person who registered and the user to a certain extent before comparing the fingerprint data, so the safety of the IC card 1 can be further enhanced.

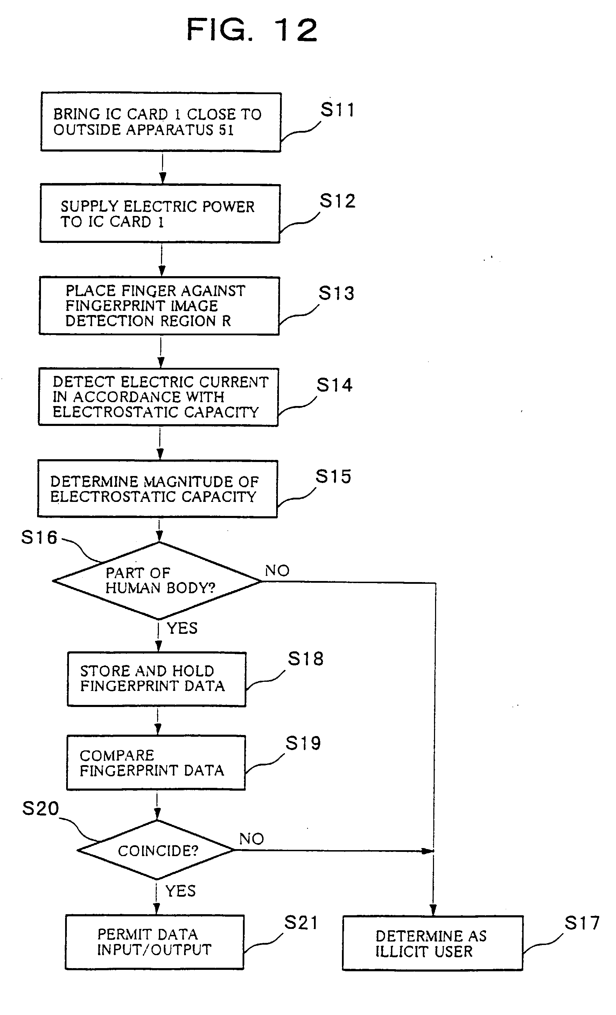

In the above embodiment described with reference to Fig. 7, the fingerprint data is first obtained and then the determination of the human body is made, but such processing is not limited to the above order. For example, as shown in Fig. 12, it can be carried out that the determination of the human body is first made and then the fingerprint is obtained, or, the both operations can be simultaneously carried out.

Further, in the above preferred embodiments, the non-contact type IC card was described, but the present invention can be applied to a contact type IC card. In the contact type IC card, the high frequency block 8 in the IC card 1 of Fig. 1 and the high frequency block 53 can be replaced by electrical contact pins, the power supply 24 in Fig. 2 can be removed, and the communication between the contact type IC card and the outside apparatus 51 can be carried out at a low frequency. Other circuits are substantially same to those in the non-contact type IC card.

While the invention has been described with reference to specific embodiment chosen for purpose of illustration, it should be apparent that numerous modifications could be made thereto by those skilled in the art without departing from the basic concept and scope of the invention.

**Claims**

1. An IC card comprising:

     a fingerprint detecting means for detecting a fingerprint;
     a fingerprint data storing means for storing a fingerprint data of a specific finger;
     a data input/output means for inputting and/or outputting a data from and/or to an apparatus; and
     a comparing means for comparing the fingerprint data detected at the fingerprint detecting means with the fingerprint data stored in the fingerprint data storing means and permitting the operation of the data input/output means only when the two coincide.

2. An IC card as set forth in claim 1, further comprising a biosensing means for sensing at least a part of human body, determining whether or not the sensed object is the part of human, and permitting the comparison of the comparing means when the sensed object is the part of human.

3. An IC card as set forth in claim 2, wherein the biosensing means comprises

     a biosensor for sensing at least the part of human, and
     a determining means for determining whether or not the sensed object is the part of human, and permitting the comparison of the comparing means based on a detection signal of the biosensor.

4. An IC card as set forth in claim 2, wherein the biosensing means comprises an electrostatic capacitance type biosensing means for detecting a part of human body based on the electrostatic capacitance of a finger.

5. An IC card as set forth in claim 1, wherein the data input/output means inputs and outputs data with an apparatus without contact.

6. An IC card as set forth in claim 1, wherein the fingerprint detecting means comprises

     a fingerprint sensor for detecting a fingerprint and outputting the resultant fingerprint image data, and
     an image processing means for applying a predetermined processing to the fingerprint image data obtained by the fingerprint sensor.

7. An IC card as set forth in claim 3, wherein the biosensor comprises an electrostatic capacitance type biosensing means for detecting a part of human body based on the electrostatic capacitance of a finger.

8. An IC card as set forth in claim 7, wherein the electrostatic capacitance detecting means comprises

     a plurality of electrostatic capacitance detection electrodes formed on the surface of the IC card and
     an electrostatic capacitance detection circuit for detecting the electrostatic capacitance formed between the electrostatic capacitance detection electrode patterns.

9. An IC card as set forth in claim 8, wherein the electrostatic capacitance detection electrodes are positioned adjacent to a position located the fingerprint detecting means.

10. An IC card as set forth in claim 9, wherein the electrostatic capacitance detection electrodes are positioned at peripheral regions of the fingerprint detecting means.

11. An IC card as set forth in claim 8, wherein the determining means determines to permit the compare by the comparing means based on the magnitude of the detected electrostatic capacitance.

**12.** An IC card as set forth in claim 1, further comprising a power supplying means capable of receiving and supplying the power for driving the fingerprint detecting means, the data input/output means and the comparing means built in the IC card from an apparatus without contact.

**13.** An IC card as set forth in claim 1, wherein the fingerprint detecting means comprises an IC chip on which a plurality of electrostatic capacitance detecting elements are formed.

**14.** An IC card as set forth in claim 1, wherein the data input/output means comprises:

a data input/output controller for inputting outputting data with the apparatus according to the allow signal input from the fingerprint data comparing means, and

a high frequency block for modulating the data output from the data input/output controller to a high frequency signal and transmitting this as a high frequency electromagnetic wave to the outside apparatus by a wireless manner, and demodulating the high frequency signal transmitted from the outside apparatus to a high frequency signal and outputting the same to the data input/output controller.

**15.** An IC card comprising:

a biosensing means for sensing at least a part of human body;

a fingerprint detecting means for detecting a fingerprint when the biosensing means detected at least a part of human body.

**16.** An IC card as set forth in claim 15, wherein the biosensingmeans is positioned adjacent to a position located the fingerprint detecting means.

**17.** An IC card as set forth in claim 16, wherein the biosensing means comprises a plurality of parts which are positioned at peripheral regions of the fingerprint detecting means.

**18.** An IC card as set forth in claim 15, wherein the fingerprint detecting means comprises a fingerprint sensor for detecting a fingerprint and outputting the resultant fingerprint image data and

an image processing means for applying a predetermined processing to the fingerprint image data obtained by the fingerprint sensor.

**19.** An IC card as set forth in claim 18, wherein the fingerprint detecting means detects the fingerprint based on the electrostatic capacitance of a finger at the IC card.

**20.** An IC card as set forth in claim 19,wherein the fingerprint sensor comprises an IC chip on which a plurality of electrostatic capacitance detecting element are formed.

**21.** An IC card as set forth in claim 18,wherein the fingerprint sensor detects the fingerprint optically.

**22.** An IC card as set forth in claim 21,wherein the fingerprint sensor comprises a charge coupled device.

**23.** An IC card as set forth in claim 15,wherein the biosensing means comprises an electrostatic capacitance detecting means for detecting electrostatic capacitance of a finger at the IC card.

**24.** An IC card as set forth in claim 23,wherein the electrostatic capacitance detecting means comprises a plurality of electrostatic capacitance detection electrode patterns formed on the surface of the card and

an electrostatic capacitance detection circuit for detecting the electrostatic capacitance formed between the electrostatic capacitance detection electrode patterns.

**25.** An IC card as set forth in claim 24, wherein the electrostatic capacitance detection electrode patterns are positioned adjacent to a position located the fingerprint detecting means.

**26.** An IC card as set forth in claim 25, wherein the electrostatic capacitance detection electrode patterns are positioned at a peripheral regions of the fingerprint detecting means.

**27.** An IC card as set forth in claim 15, wherein comprising

a fingerprint data storing means for storing the fingerprint data of a specific finger;

a data input/output means for inputting and/or outputting a data from and/or to an apparatus; and

a comparing means for comparing the fingerprint data detected at the fingerprint detecting means with the stored fingerprint data in the fingerprint data storing means and permitting the operation of the data input/output means only when the two coincide.

**28.** An IC card as set forth in claim 27, wherein the data input/output means inputs and outputs data with an apparatus without contact.

**29.** An IC card as set forth in claim 28, wherein the data input/output means comprises:

a data input/output controller for inputting outputting data with the apparatus according to the permit signal input from the fingerprint data comparing means, and
a high frequency block for modulating the data output from the data input/output controller to a high frequency signal and transmitting this as a high frequency electromagnetic wave to the outside apparatus by a wireless method, and demodulating the high frequency signal transmitted from the outside apparatus to a high frequency signal and outputting the same to the data input/output controller.

# FIG. 1

# FIG. 2

EP 0 994 439 A2

# FIG. 3

# FIG. 4

# FIG. 5

# FIG. 6

Py

Px

K

Y

X

11

# FIG. 7

BRING IC CARD 1 CLOSE TO
OUTSIDE APPARATUS 51 — S1

↓

SUPPLY ELECTRIC POWER
TO IC CARD 1 — S2

↓

PLACE FINGER AGAINST
FINGERPRINT IMAGE
DETECTION REGION R — S3

↓

DETECT ELECTRIC CURRENT
IN ACCORDANCE WITH
ELECTROSTATIC CAPACITY — S4

↓

STORE AND HOLD
FINGERPRINT DATA — S5

↓

DETERMINE MAGNITUDE OF
ELECTROSTATIC CAPACITY — S6

↓

S7 — ◇ PART OF HUMAN BODY? ── NO ──┐

│ YES

COMPARE
FINGERPRINT DATA — S9

↓

S10 — ◇ COINCIDE? ── NO ──────────┤

│ YES                              ↓

PERMIT DATA
INPUT/OUTPUT — S11        DETERMINE AS
                         ILLICIT USER — S8

# FIG. 8

101

102

102

# FIG. 9

EP 0 994 439 A2

# FIG. 10

WL

140

121

BL

102

# FIG. 11

EP 0 994 439 A2

# FIG. 12

```
BRING IC CARD 1 CLOSE TO          S11
OUTSIDE APPARATUS 51

        ↓

SUPPLY ELECTRIC POWER             S12
TO IC CARD 1

        ↓

PLACE FINGER AGAINST              S13
FINGERPRINT IMAGE
DETECTION REGION R

        ↓

DETECT ELECTRIC CURRENT           S14
IN ACCORDANCE WITH
ELECTROSTATIC CAPACITY

        ↓

DETERMINE MAGNITUDE OF            S15
ELECTROSTATIC CAPACITY

        ↓
S16
    PART OF          NO
    HUMAN BODY?  ─────────────┐
        │                     │
        │ YES                 │
        ↓                     │
STORE AND HOLD      S18        │
FINGERPRINT DATA              │
        ↓                     │
COMPARE             S19        │
FINGERPRINT DATA              │
        ↓                     │
S20                           │
    COINCIDE?    NO           │
    ─────────────────────────┤
        │ YES                 │
        ↓                     ↓
PERMIT DATA         S21    DETERMINE AS      S17
INPUT/OUTPUT              ILLICIT USER
```

22